# EUROPÄISCHE PATENTSCHRIFT

(11) **EP 4 015 788 B1**
(45) Veröffentlichungstag und Bekanntmachung des Hinweises auf die Patenterteilung: **12.02.2025**
(21) Anmeldenummer: 21214420.8
(22) Anmeldetag: 14.12.2021
(51) Int. Cl.: F01N 9/00

(54) **VORRICHTUNG UND VERFAHREN ZUR NO- UND/ODER NOX-MESSUNG VON KRAFTFAHRZEUGABGASEN**
DEVICE AND METHOD FOR NO AND / OR NOX MEASUREMENT OF MOTOR VEHICLE EXHAUST GASES
DISPOSITIF ET PROCÉDÉ DE MESURE DES NO ET/OU DES NOX DES GAZ D'ÉCHAPPEMENT DE VÉHICULES AUTOMOBILES

(30) Priorität: 18.12.2020 DE 102020216338
(43) Veröffentlichungstag der Anmeldung: 22.06.2022
(73) Patentinhaber: KNESTEL Technologie & Elektronik GmbH, 87496 Hopferbach (DE)
(72) Erfinder: KNESTEL, Markus; Dr. Ing., 87496 Hopferbach (DE)
(74) Vertreter: MERH-IP Matias Erny Reichl Hoffmann Patentanwälte PartG mbB

(56) Entgegenhaltungen:
- DE-C2- 19 823 923
- JP-A- 2017 090 464
- JP-B2- 6 404 030

## Beschreibung

Die Erfindung betrifft eine Vorrichtung und ein Verfahren zur NO- und/oder NOx-Messung von Kraftfahrzeugabgasen.

Verbrennungsmotoren emittieren, wie jeder Verbrennungsprozess, Stickoxide (NO, NOx). Diese sollen durch eine adäquate Abgasnachbehandlung, z.B. unter Einsatz von Katalysatoren, reduziert werden.

Die meisten Kraftfahrzeuge mit Verbrennungsmotoren zeigen stark erhöhte Stickoxid-Emissionen nur unter Last. Um die Abgasnachbehandlung zu überprüfen, werden die Stickoxid Emissionen von Verbrennungsmotoren üblicherweise unter Last auf Prüfständen ermitteln. Diese Vorrichtungen sind technisch aufwendig und nicht mobil.

So ist beispielsweise in der JP 6 404030 B2 ein Durchflusssensor zur Messung von Verbrennungsmotorabgasen gezeigt, welcher, neben der Messung entsprechender Gasparameter, gleichermaßen etwaige Fehlfunktionen des Durchflusssensors während der Abgasdurchflussmessung erkennen und einen Prozess zur Normalisierung entsprechenden Durchflusssensors durchführen kann. Insbesondere sieht der oben genannten Durchflusssensor hierzu eine zusätzliche Empfangsschaltung vor, welche Durchflussmesssignale, welche einen Durchflussmesswert des durch ein Abgasrohr strömenden Abgases beschreiben, empfangen und diese mit entsprechenden Betriebszustandssignalen vergleichen kann, sodass abnormale Betriebszustände identifiziert werden können.

Darüber hinaus ist in der JP 2017 090 464 A ebenfalls ein Abgasströmungsrohrsystem gezeigt, welches zur Verwendung mit einer Emissionstestausrüstung die Abgaswerte eines Kraftfahrzeugabgases ermitteln können. Genauer umfasst besagtes System hierbei ein erstes und ein zweites Strömungsrohr, welche Abgase aus einem Motorabgasrohr aufnehmen und an die Emissionstestausrüstung liefern können, ein Ventil zur Steuerung des Abgases durch das zweite Strömungsrohr und ein Steuersystem, das, abhängig von einem gemessenen Strömungsratensignal, den Betrieb besagten Ventils steuert, um die Strömung des Abgases durch das zweite Strömungsrohr entsprechend des Signals zu ändern.

Es ist daher eine Aufgabe der Erfindung, eine Vorrichtung und ein Verfahren zur NO- und/oder NOx-Messung von Kraftfahrzeugabgasen zur Verfügung zu stellen, die sehr genaue reproduzierbare Messergebnisse und eine mobile Einsetzbarkeit ermöglichen.

Diese Aufgabe wird erfindungsgemäß durch eine Vorrichtung und ein Verfahren zur NO- und/oder NOx-Messung von Kraftfahrzeugabgasen nach den unabhängigen Ansprüchen gelöst. Besonders bevorzugte Ausführungsformen der Erfindung sind in den abhängigen Ansprüchen angegeben.

Eine erfindungsgemäße Vorrichtung zur NO- und/oder NOx-Messung von Kraftfahrzeugabgasen umfasst eine Abgassonde, die derart ausgebildet ist, dass diese in einer Abgasleitung des Motors anordenbar ist, und eine Messeinrichtung, die mit der Abgassonde in Verbindung steht und die eingerichtet ist, während dem Messvorgang NO und/oder NOx mit einer Messfrequenz von zumindest zehnmal pro Sekunde zu erfassen.

Die erfindungsgemäße Vorrichtung kann Stickstoffmonoxid (NO) und/oder Stickoxide (NOx) in den Abgasen eines Verbrennungsmotors mit einer hohen Messfrequenz messen. Die hohe Messfrequenz, bevorzugt von zumindest zehnmal pro Sekunde, ermöglicht die genaue Erfassung und zeitliche Auflösung von Stickoxidgehaltsänderungen im Abgas bei Drehzahländerungen des Verbrennungsmotors. Wird der Verbrennungsmotor schnell beschleunigt, ergeben sich spezifische NO- bzw. NOx-Verläufe, die von der erfindungsgemäßen Vorrichtung in ihrem zeitlichen Verlauf erfasst und analysiert werden können. Beispielsweise wird ein Messzyklus mittels der erfindungsmäßen Vorrichtung durchgeführt, während der Motor gegen seine eigene Massenträgheit bspw. ausgehend vom Leerlauf unter relativ hoher Last, beispielsweise im Kick-Down (Vollgas), hoch beschleunigt wird. Das Ende des Messzyklus kann beispielsweise erreicht sein, wenn der Motor durch seine Drehzahlbegrenzung an einer weiteren Beschleunigung gehindert wird oder der Drehzahlanstieg für einen vorbestimmten Zeitraum T bzw. für eine vorbestimmte Zeit erfolgt ist. Daraus resultiert ein kurzes Messintervall im kleinen Sekundenbereich, in dem die vorliegende Erfindung durch die hohe Messfrequenz von mindestens 10 Messungen pro Sekunde, aussagekräftige NO- bzw. NOx-Verläufe generieren kann. Dadurch ermöglicht es die vorliegende Erfindung, die NO und/oder NOx-Emissionen eines Verbrennungsmotors schnell und auch wenn sich das Kraftfahrzeug, in das der Verbrennungsmotor eingebaut ist, im Stillstand befindet, zu erfassen und zu bestimmen. Dies ermöglicht eine besonders einsatzflexible und genaue Bestimmung der NO- bzw. NOx-Emissionen.

Gemäß einer Ausführungsform umfasst die Vorrichtung zusätzlich eine Erfassungseinrichtung, die derart ausgebildet ist, dass diese die Drehzahl eines Kraftfahrzeugmotors während eines Messvorgangs in einem Bereich erfasst, in dem ein Anstieg der Drehzahl pro Zeiteinheit grösser als ein vorbestimmter Schwellwert S ist und für einen vorbestimmten Zeitraum T während einer Drehzahlerhöhung. Dadurch kann die Messung beispielsweise automatisiert auf einen bestimmten Bereich eingeschränkt werden, indem die Drehzahlerhöhung pro Zeit (Drehzahlbeschleunigung) den vordefinierten Schwellwert S übersteigt. Mögliche störende Starteffekte beim Beginn der Beschleunigung, z.B. bedingt durch Ansprechzeiten der Motorsteuerung oder auch die zeitlich verzögerte Reaktion des Motors auf das Betätigen des Gaspedals durch den Bediener, können damit aus dem eigentlichen Messvorgang herausgehalten werden. Ebenso kann eine vorbestimmte Zeit während einer Drehzahlerhöhung gewählt werden, die beispielsweise im Bereich der Zeit liegt, während ein Bediener Vollgas gibt und den Motor beschleunigen lässt. Randbereiche in der Beschleunigung können damit eliminiert werden und das Erhalten von standardmäßig reproduzierbaren Messergebnissen kann dadurch verbessert werden.

Gemäß einer Ausführungsform arbeitet die Messeinrichtung nach dem Chemilumineszenz-Prinzip. Unter Zugabe von Ozon (O3) werden dabei NO Moleküle zu NO2 Molekülen im angeregten Zustand oxidiert. Beim Verlassen des angeregten Zustands wird Energie in Form eines Lichtblitzes frei, der über sensitive Sensoren detektiert werden kann. Das Volumen der Messkammer, in der die Messung erfolgt, kann hierbei mit wenigen Millilitern ausgeführt werden. Das Chemilumineszenz-Prinzip kann die hohe geforderte Messfrequenz durch seine geringe Ansprechzeit leisten. Durch hohe Durchflussgeschwindigkeiten aufgrund des geringen Volumens der Messkammer und das Absenken des Drucks auf wenige mbar in der Messkammer der Messeinrichtung oder auch im kompletten Probenentnahmestrang können dabei besonders schnelle Gasaustauschzeiten und dadurch eine hohe Messfrequenz erreicht werden.

Gemäß einer Ausführungsform beträgt die Messfrequenz zumindest 20 Messungen/Sek, bevorzugt zumindest 20 bis 3000 Messungen/Sekunde, besonders bevorzugt mindestens 80 bis 400 Messungen/Sekunde. Wie bereits beschrieben, kann der Messvorgang, bzw. das Durchlaufen der Messkurve, sehr schnell erfolgen und in wenigen Sekunden, beispielsweise 2 Sekunden, abgeschlossen sein. Die Aussagekraft des Messergebnisses ist dabei in einem gewissen Rahmen umso größer, je mehr Messwerte erzielt werden. Es hat sich in Versuchen gezeigt, dass sich beispielsweise mit 100 Messungen/ Messwerten pro Sekunde zeitlich gut detaillierte und damit auch gut analysierbare Messkurven ergeben.

Gemäß einer Ausführungsform ist der Schwellwert S grösser als eine Drehzahländerung deltaU von 1000 U/min pro Sekunde und bevorzugt grösser als eine Drehzahländerung deltaU von 2500 U/min pro Sekunde. Der Schwellwert S umfasst beispielsweise einen Drehzahlanstiegsbereich von 2000-5000 U/min, bevorzugt von 2500-4000 U/min. Der Schwellenwert S kann abhängig gemacht werden vom Typ des zu messenden Motors. Für großvolumige, trägere und weniger hochdrehende Motoren in Lastkraftwagen kann der Schwellenwert S niedriger gewählt werden als für kleinvolumigere Motoren in Sportwagen oder Motorrädern, deren Motoren schneller heraufbeschleunigen können.

Gemäß einer Ausführungsform ist eine Pumpe vorgesehen, die mit einer Messleitung in Verbindung steht, so dass über eine Flussbeschränkung der Druck in der Messleitung auf 10 bis 250 mbar, bevorzugt auf 25 bis 150 mbar, einstellbar ist. Das Absenken des Drucks in der Messleitung auf wenige mbar ermöglicht sehr schnelle Gasaustauschzeiten. Damit kann, beispielweise in Kombination mit einer Messreinrichtung basierend auf den Chemolumineszenz-Prinzip, eine sehr schnelle Abfolge der Messungen, d.h. eine hohe Messfrequenz, erzielt werden. Dadurch wird eine gute zeitliche Auflösung beim Messen kurzeitiger Schwankungen in den NO- bzw. NOx-Werten erreicht.

Gemäß einer Ausführungsform ist die Flussbeschränkung eine Düse, eine Kapillare, ein verengtes Rohr und/oder eine Blende. Die Flussbeschränkung ermöglicht dabei im Zusammenwirken mit einer ansaugenden Pumpe eine Reduktion des Drucks im Probenentnahmestrang, insbesondere der Messleitung. Sie hat also die Funktion einer Drossel.

Gemäß einer Ausführungsform weist die Messleitung einen Innendurchmesser von 2 bis 10 mm auf. Die Messeinrichtung umfasst beispielsweise eine Reaktionskammer mit einem Volumen von 1 bis 100ml, bevorzugt von 50 bis 80ml, weiter bevorzugt von 60 bis 70ml. Das geringe Volumen der Reaktionskammer ermöglicht einen geringen Verbrauch an Abgas für die Messung und ist daher hilfreich im Hinblick auf schnelle Abgas Austauschzeiten und damit eine hohe Messfrequenz.

Gemäß einer Ausführungsform ist der Messeinrichtung ein NOx-Konverter zum Umwandeln von Stickoxiden, bspw. NO2, N2O3 und N2O4, in NO vorgeschaltet. Beispielsweise kann die Chemolumineszenz bei der Oxidation von Stickstoffmonoxid zu Stickstoffdioxid genutzt werden, um Stickstoffmonoxid nachzuweisen. Wird Stickstoffdioxid vor der Oxidation im Analysator katalytisch reduziert, können beide Stickoxide nachgewiesen werden.

Gemäß einer Ausführungsform ist die Erfassungseinrichtung für die Drehzahl des Kraftfahrzeugmotors derart mit der Steuerung des Kraftfahrzeugmotors verbindbar, dass sie direkt dort die Drehzahl des Kraftfahrzeugmotors auslesen kann. Beispielsweise kann die Erfassungseinrichtung die Drehzahl des Kraftfahrzeugmotors steuern. Gegenüber der Variante der Vorrichtung mit manueller Drehzahlerhöhung oder Drehzahlerfassung durch den Bediener ermöglicht das automatisierte Auslesen der Drehzahl eine höhere Genauigkeit. Ferner werden auch die Anforderungen an die Qualifikation des Bedieners gesenkt, da dieser dann nicht, beispielsweise nach Gehör, das Erreichen von Drehzahlen erfassen muss. Eine weitergehende Automatisierung des Messverfahrens wird erreicht, wenn die Drehzahl des Verbrennungsmotors durch die Vorrichtung selbst, beispielsweise durch die Erfassungseinrichtung oder die Messeinrichtung, gesteuert wird. Dies wird durch eine entsprechende steuerungstechnische Verbindung des Rechners der Vorrichtung mit der Fahrzeugsteuerung bzw. Motorsteuerung ermöglicht.

Ein erfindungsgemäßes Verfahren zur NO- und/oder NOx-Messung von Kraftfahrzeugabgasen umfasst folgende Schritte: (a) Anordnen einer Abgassonde in einer Abgasleitung eines Kraftfahrzeugmotors; (b) Drehzahlerhöhung des Kraftfahrzeugmotors; (c) Durchführen eines Messvorgangs in einem Bereich, in dem ein Anstieg der Drehzahl pro Zeiteinheit grösser ist als ein vorbestimmter Schwellwert S und/oder für einen vorbestimmten Zeitraum T während der Drehzahlerhöhung; (d1) während des Messvorgangs, mehrfaches Erfassen der NO- und/oder NOx-Konzentration in der Abgasleitung in schneller Abfolge mit einer Messfrequenz von zumindest zehnmal pro Sekunde mittels einer Messeinrichtung; (e) Anzeigen und/oder Auswerten der erfassten Werte für die NO und/oder NOx-Konzentration.

Gemäß einer Ausführungsform umfasst das Verfahren zusätzlich die Schritte: (d2) Überprüfen ob der Schwellwert S für einen vorbestimmten Zeitraum T überschritten wird; und (d3) Erklären des Messvorgangs als gültig, wenn Schritt (d2) bejaht wird. Mit dieser Maßnahme kann beispielsweise automatisch durch den Rechner (Steuerung) der Vorrichtung zur NO- und/oder NOx-Messung von Kraftfahrzeugabgasen festgestellt werden, ob die Messung das festgelegte Gütekriterien der Überschreitung des Schwellenwertes S erfüllt. Dazu wird mittels der im Hinblick auf die Vorrichtung bereits beschriebenen Erfassungsvorrichtung die Drehzahl des Verbrennungsmotors, beispielsweise direkt von der Fahrzeugsteuerung bzw. Motorsteuerung, abgegriffen und per Datenkabel oder Funk an die Vorrichtung zur NO- und/oder NOx-Messung von Kraftfahrzeugabgasen übertragen. Deren Rechner verarbeitet dann die Drehzahldaten in Zusammenhang mit den erfassten NO/NOx-Werten.

Gemäß einer Ausführungsform beträgt der vorbestimmte Zeitraum T 0,5-3s, bevorzugt 1-2s. Ein Vorteil des erfindungsgemäßen Verfahrens liegt darin, dass die Messung in einer sehr kurzen Zeit abschließbar ist. Da die gewünschte Last des Verbrennungsmotors durch dessen hohe Beschleunigung im Leerlauf des Getriebes des Kraftfahrzeugs, erzielt wird, ist die für die Messung erforderliche Drehzahländerung schnell durchlaufen. Der eigentliche Messvorgang kann in unter 3 Sekunden durchgeführt werden. Weil die Rüstzeiten für die Vorrichtung am Kraftfahrzeug auch sehr gering sind, ist es möglich, einen hohen Durchsatz pro Zeit hinsichtlich zu messender Fahrzeuge/Fahrzeugmotoren zu erreichen. Das Verfahren ist damit auch in dieser Hinsicht konventionellen Rollenprüfständen stark überlegen.

Gemäß einer Ausführungsform wird im Verfahrensschritt (c) die Drehzahlerhöhung des Motors wenigstens zeitweise im Bereich von 80 bis 100%, insbesondere im Bereich von 90 bis 100%, der Maximalbeschleunigung des Motors durchgeführt. Um eine hohe Belastung des Motors alleine durch dessen Heraufbeschleunigen zu erzielen, ist eine starke Beschleunigung des Motors erforderlich. Die Messung erfolgt beispielsweise im Kick-Down, bei dem das Gaspedal maximal betätigt wird bzw. Vollgas gegeben wird. Auf diese Weise können die besonderen unter hoher Last des Motors auftretenden Schadstoffemissionen erzielt und gemessen werden.

Gemäß einer Ausführungsform befindet sich der Kraftfahrzeugmotor im Verfahrensschritt (c) wenigstens zeitweise in einem vorbestimmten Lastbereich von mindestens 5 kW, bevorzugt von mindestens 11 kW. Es hat sich gezeigt, dass für ein starkes Heraufbeschleunigen im Leerlauf bei vielen Motoren ein Bereich von 5 kW bis 11 kW ausreichend ist. Durch die kurze Testdauer und verhältnismäßig geringe Leistung ist das erfindungsgemäße Verfahren Fahrzeugschonend und sparsam im Hinblick auf den erforderlichen Kraftstoffeinsatz.

Gemäß einer Ausführungsform wird der Messvorgang in einem vorbestimmten Lastbereich des Kraftfahrzeugmotors durchgeführt, wobei der vorbestimmte Lastbereich 10 - 100 % Volllast, bevorzugt 90 - 100% Volllast oder weiter bevorzugt 100% Volllast beträgt.

Gemäß einer Ausführungsform ist der Schwellwert S grösser als eine Drehzahländerung deltaU von 1000 U/min pro Sekunde und bevorzugt grösser als eine Drehzahländerung deltaU von 2500 U/min pro Sekunde. Der Schwellwert S umfasst beispielsweise einen Drehzahlanstiegsbereich von 2000-5000 U/min, insbesondere 2500-4000 U/min. Das Vorsehen eines Drehzahlanstiegsbereichs für den Schwellwert S ermöglicht eine größere Flexibilität bei der Durchführung des Verfahrens. Es hat sich gezeigt, dass spezifische Muster von Schadstoffemissionsspitzen über die Zeit in einem Bereich für S auftreten, was eine gewisse Flexibilität bei der Durchführung des Verfahrens lässt.

Gemäß einer Ausführungsform ist während des Messvorgangs eine Startdrehzahl eine Leerlaufdrehzahl. Beispielsweise ist eine Enddrehzahl durch die Drehzahlbegrenzung des Motors festgelegt. Die Leerlaufdrehzahl als Startdrehzahl ist leicht zu realisieren, da sie ohnehin in der Regel anliegt, wenn das Gaspedal oder dergleichen nicht betätigt wird. Die Drehzahlbegrenzung als obere Grenze ist ebenfalls einfach realisierbar, da jeder Motor bei einer Drehzahl abregelt. Wird die Erhöhung der Drehzahl manuell durch das Betätigen des Gaspedals, eines Gashebels oder dergleichen durch einen Bediener durchgeführt, kann dieser beispielsweise nach Gehör oder unter Berücksichtigung eines am Kraftfahrzeug vorhandenen Drehzahlmessers erkennen, dass sich die Drehzahl nicht weiter erhöht oder eine vorgegebene Grenzdrehzahl anliegt. Er kann den Messvorgang dann beenden oder nach einer Reduzierung der Drehzahl einen neuen Messvorgang starten.

Gemäß einer Ausführungsform befindet sich der Kraftfahrzeugmotor eingebaut in einem Kraftfahrzeug und dieser befindet sich während des Messvorgangs (b) im Leerlauf. Der Verbrennungsmotor des Kraftfahrzeuges kann dabei örtlich sehr flexibel geprüft werden. Durch das Durchführen der Messung im Leerlauf entfällt die Notwendigkeit eines Rollenprüfstandes oder das aufwendige Installieren am Kraftfahrzeug und das Mitführen einer Messvorrichtung während der Fahrt. Beispielsweise können bei Fahrzeugen, die direkt aus dem Verkehr heraus gestoppt wurden, die genannten Abgaswerte sofort an Ort und Stelle ermittelt werden.

Gemäß einer Ausführungsform werden die Verfahrensschritte (b) bis (d1) und/oder (b) bis (d3) mehrfach, insbesondere dreimal, in kurzer Abfolge hintereinander durchgeführt. Durch das mehrfache Durchführen der Messung und Bildung von Mittelwerten über die Messergebnisse können zufällige Schwankungen hinsichtlich der einzelnen Messungen kompensiert werden. Ferner lassen sich auf diese Weise Parametereinflüsse, wie die Öltemperatur oder Temperatur im Bereich der Abgasnachbehandlung, auf die Messung erkennen und durch entsprechende Algorithmik in der Auswertung kompensieren. Dadurch können bei unterschiedlichen spezifischen Rahmenbedingungen, wie Öltemperatur des Verbrennungsmotors und Temperatur im Bereich der Abgasnachbehandlung, genauere Messergebnisse erhalten werden. Beispielsweise beträgt der zeitliche Abstand zwischen dem Durchführen des Verfahrensschrittes (b) nicht mehr als 10 Sekunden, insbesondere nicht mehr als 5 Sekunden. Durch die kurze Zeitdauer wird ein Abkühlen des Motors, insbesondere des Motoröls bzw. der Abgasnachbehandlung, zwischen den Messungen verhindert. Dies ermöglicht es, Einflüsse der Temperatur des Motors, insbesondere des Motoröls bzw. der Abgasnachbehandlung, auf die Messergebnisse zu identifizieren.

Gemäß einer Ausführungsform arbeitet die Messreinrichtung nach dem Chemilumineszenz-Prinzip. Die Wirkweise und die Vorteile der Anwendung dieses Prinzips wurde schon weiter vorne im Hinblick auf die Vorrichtung dargestellt und gelten auch für das Verfahren.

Gemäß einer Ausführungsform wird in einem zusätzlichen Verfahrensschritt zumindest eine Öltemperatur des Kraftfahrzeugmotors und/oder eine Temperatur einer Abgasnachbehandlungseinrichtung abgefragt. Beispielsweise wird der Messvorgang nur über vorbestimmten Grenztemperaturen einer Öltemperatur des Kraftfahrzeugmotors bzw. einer Temperatur in der Abgasnachbehandlungseinrichtung durchgeführt. Beide genannten Temperaturen können unter Umständen einen Einfluss auf die Bestimmung der NO- bzw. NOx-Werte durch die Vorrichtung haben. Eine Berücksichtigung der Werte kann dazu beitragen, die Aussagekraft der Messergebnisse weiter zu erhöhen.

Die Erfindung umfasst auch die Verwendung der beschriebenen Vorrichtung zur NOx-Messung von Kraftfahrzeugabgasen in dem dargelegten Verfahren zur NOx-Messung von Kraftfahrzeugabgasen.

Ein erfindungsgemäßes System weist ein Kraftfahrzeug und die beschriebe Vorrichtung zur NOx-Messung von Kraftfahrzeugabgasen auf. Dabei umfasst das Kraftfahrzeug einen Verbrennungsmotor und eine Abgasleitung, die mit dem Verbrennungsmotor verbunden ist, wobei die Abgassonde in der Abgasleitung des Motors zum Aufnehmen von Abgasen des Verbrennungsmotors anordenbar ist, und wobei die Erfassungseinrichtung mit einer Steuereinheit des Motors zum Abfragen und/oder zum Steuern der Drehzahl des Motors verbindbar ist.

Bevorzugte Ausführungsformen der Erfindung werden nachfolgend ausführlich unter Bezugnahme auf die begleitenden schematischen und beispielhaften Zeichnungen beschrieben. In den Figuren werden für gleiche oder entsprechende Komponenten die gleichen Bezugszeichen verwendet, sofern nicht anders angegeben.
- **Fig.** 1: zeigt eine Vorrichtung zur NO- und/oder NOx-Messung von Kraftfahrzeugabgasen angeordnet an einer Abgasleitung eines Kraftfahrzeugs mit Verbrennungsmotor gemäß einer Ausführungsform in einer schematischen Darstellung; und
- **Fig. 2**: zeigt einen Messergebnisverlauf wie er mit einem erfindungsgemäßen Verfahren zur NO- und/oder NOx-Messung von Kraftfahrzeugabgasen mit der erfindungsgemäßen Vorrichtung zur NO- und/oder NOx-Messung von Kraftfahrzeugabgasen gemäß dem Ausführungsbeispiel von Fig. 1 erzielt wurde.

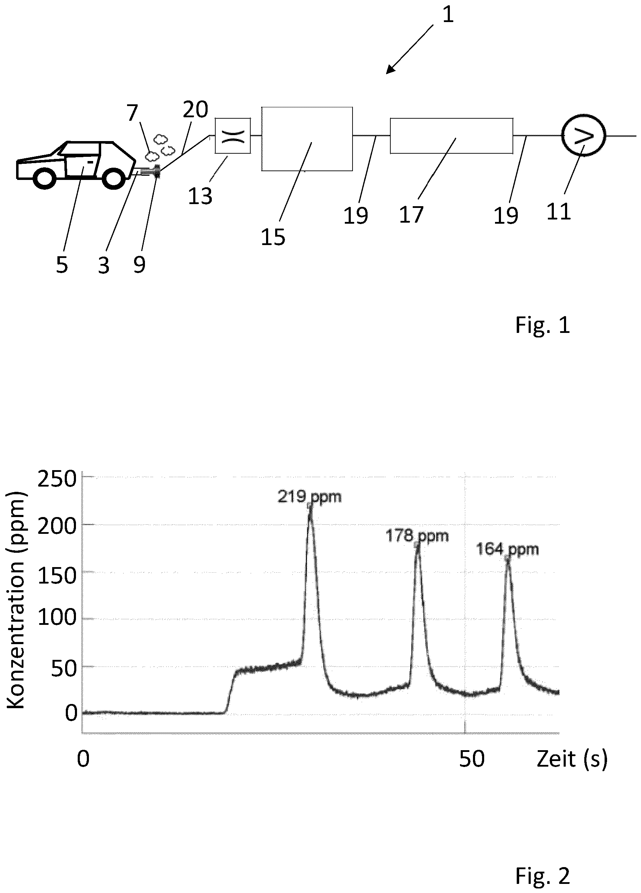

Fig. 1 zeigt eine Vorrichtung 1 zur NO- und/oder NOx-Messung von Kraftfahrzeugabgasen angeordnet an einer Abgasleitung 3 eines Kraftfahrzeugs 5 mit Verbrennungsmotor gemäß einer Ausführungsform in einer schematischen Darstellung.

Rechts neben dem Kraftfahrzeug 5 sind im Bild wolkenartig Verbrennungsabgase 7 des Verbrennungsmotors (nicht dargestellt) des Kraftfahrzeugs 5 dargestellt, die mittels der Abgasleitung 3 (Abgasanlage des Verbrennungsmotors des Kraftfahrzeugs) aus dem Fahrzeug abgeleitet werden.

Eine Abgassonde 9 der Vorrichtung zur NO- und/oder NOx-Messung von Kraftfahrzeugabgasen 1 ist in die Abgasleitung 3 eingeführt, um Verbrennungsabgase 7 des Verbrennungsmotors aus der Abgasleitung 3 zu entnehmen und über eine Entnahmeleitung 20 einer Flussbegrenzung 13 zuzuführen. Ganz rechts im Bild ist eine Pumpe 11 dargestellt, die die Verbrennungsabgase 7 ansaugt und dabei einen Unterdruck im Leitungssystem der Vorrichtung 1 erzeugt. Die Verbrennungsabgase 7 strömen nach der Entnahme aus der Abgasleitung 3 über die Entnahmeleitung 20 durch eine Flussbegrenzung 13. Diese ist bei diesem Ausführungsbeispiel bspw. als Drossel bzw. ein verengtes Rohr (Venturi) ausgeführt. Die Flussbegrenzung 13 lässt im Zusammenwirken mit der ansaugenden Pumpe 11 einen Unterdruck im Leitungssystem, insbesondere einer Messleitung 19 zum Durchleiten des zu messenden Abgases, der Vorrichtung 1 entstehen.

Nachgeschaltet der Flussbegrenzung 13 kann bei diesem Ausführungsbeispiel ein NOx-Konverter 15 vorgesehen sein, der Stickstoffdioxid (NO2) in Stickstoffmonoxid (NO) umwandelt, so dass dieses ebenfalls von der Vorrichtung zur NO- und/oder NOx-Messung erfasst werden kann. Ebenso können erfindungsgemäß auch andere Stickoxide mittels des Konverters 15 für die Messung in NO umgewandelt werden.

Stromaufwärts der Pumpe 11 und stromab der Flussbegrenzung 13 ist eine Messeinrichtung 17 angeordnet, die mit der Abgassonde 9 strömungstechnisch in Verbindung steht und die bei diesem Ausführungsbeispiel eingerichtet ist, während dem Messvorgang NO mit einer Messfrequenz von zumindest 10 Mal pro Sekunde zu erfassen. Die Messeinrichtung arbeitet gemäß diesem Ausführungsbeispiel nach dem Chemilumineszenz-Prinzip.

Mittels der Pumpe 11 ist im Zusammenwirken mit der Flussbegrenzung 13 der Druck des Verbrennungsabgases im Bereich der Messeinrichtung 17 auf einen Unterdruck von 25 bis 150 mbar einstellbar. Eine Messleitung 19, die das Abgas zur Messeinrichtung 17 fördert, kann hierbei mit der Pumpe 11 und der Flussbegrenzung 13 fluidtechnisch in Verbindung stehen. Durch den genannten Unterdruck in Verbindung mit dem Chemilumineszenz-Prinzip lassen sich hohe Messfrequenzen in Verbindung mit einer hohen Messgenauigkeit realisieren.

Rohes Abgas enthält ca. 10% Wasser absolut. Der Taupunkt bei Umgebungstemperatur liegt bei 20°C bei ca. 2,5% Wasser absolut. Durch die Absenkung des Drucks in der Messleitung und in der Messeinrichtung wird ein mögliches Taupunktproblem, das zum unerwünschten Auftreten von Kondenswasser in der Messleitung bzw. Messvorrichtung führen kann, vermieden. Ohne die erfindungsgemäße Druckabsenkung kann das Taupunktproblem nur aufwendig mittels Wasserabscheider bzw. Kühler gelöst werden. Diese können durch die Druckabsenkung entfallen, weil sich durch den Unterdruck der Taupunkt verschiebt und das Auftreten von Kondenswasser vermieden wird.

Fig. 2 zeigt einen Messergebnisverlauf wie er mit einem erfindungsgemäßen Verfahren zur NO- und/oder NOx-Messung von Kraftfahrzeugabgasen mit der erfindungsgemäßen Vorrichtung 1 zur NO- und/oder NOx-Messung von Kraftfahrzeugabgasen gemäß dem Ausführungsbeispiel von Fig. 1 erzielt wurde.

Zunächst wurde die Abgassonde 9 in der Abgasleitung 3 eines Kraftfahrzeugmotors angeordnet. Nun wurde dreimal die Drehzahl des Kraftfahrzeugmotors erhöht und dann wieder abgesenkt. Dabei wurde jeweils mittels der Messeinrichtung 17 der NO-Gehalt in den Verbrennungsabgasen bestimmt. Die Messkurve zeigt drei Peaks (219 ppm, 178 ppm, 164 ppm NO-Gehalt) für den NO-Gehalt in den Verbrennungsabgasen mit lokalen Maximalwerten über der Zeit, die mit der Messeinrichtung 17 festgestellt wurden. Der Unterschied zwischen den Peaks ist durch die Erwärmung der Abgasnachbehandlung zu erklären. Die Messeinrichtung 17 kann beispielsweise mit ihrem Rechner (nicht dargestellt) mit der Steuerung des Kraftfahrzeugs verbunden werden, um dort Werte, wie Temperatur in der Abgasnachbehandlung, Öltemperatur und dergleichen abzufragen und bei der Auswertung hinsichtlich der NO-Konzentration zu berücksichtigen.

Hier wurde das Verfahren so ausgeführt, dass ein Messvorgang für einen vorbestimmten Zeitraum T während der Drehzahlerhöhung durchgeführt wurde. Während des Messvorgangs wurde mehrfach die NO-Konzentration in der Abgasleitung in schneller Abfolge erfasst. Die dargestellten Messkurven resultieren aus einer Anwendung des Verfahrens mit einer Messfrequenz 100 Messungen pro Sekunde mittels der Messeinrichtung 17. Die Messeinrichtung 17 gemäß diesem Ausführungsbeispiel ist eingerichtet, die Messwerte abzuspeichern, auf einem dafür vorgesehen Display anzuzeigen und über übliche Schnittstellen, wie USB, serielle Schnittstellen, Bussysteme, Funk zur Verfügung zu stellen.

Die Messung wurde hier an einem in einem Kraftfahrzeug verbauten Verbrennungsmotor durchgeführt. Das Fahrzeuggetriebe wurde für die Messung in den Leerlauf geschaltet. Die Erhöhung der Drehzahl erfolgte hier gegen die Trägheit des Verbrennungsmotors. Bei den dargestellten Messungen wurde durch den Bediener das Gaspedal maximal betätigt, so dass die Messung im sogenannten Kick-Down durchgeführt wurde. Ebenso kann durch die oben genannte steuerungstechnische Kopplung der Vorrichtung 1, insbesondere der Erfassungseinrichtung für die Drehzahl oder der Messeinrichtung 17, und der Fahrzeugsteuerung eine direkte Steuerung der Motordrehzahl durch die oder auch eine Abfrage der Motordrehzahl durch die Messeinrichtung 17 bzw. die Vorrichtung 1 erfolgen. Es ist immanent, dass die Erfassungseinrichtung und Messeinrichtung 17 Rechner beinhalten, bzw. in einer übergreifenden Steuerung der Vorrichtung 1 realisiert sind.

Durch die Beschleunigung der sich bewegenden Teile des Verbrennungsmotors gegen ihre Massenträgheit ergibt sich eine ausreichend hohe Belastung des Verbrennungsmotors, um aussagekräftige, sehr genaue und reproduzierbare NO-Messungen unter Last durchführen zu können. Die aufwendige Anordnung des Kraftfahrzeugs auf einem Rollenprüfstand kann damit entfallen. Die erfindungsgemäße Vorrichtung ist besonders gut ortsunabhängig einsetzbar, insbesondere da sie im Volumen eines gewöhnlichen Flugreisekoffers realisierbar ist und von einer Person transportiert und in Betrieb genommen werden kann.

Die Erfindung betrifft gemäß einem weiteren 1. Aspekt ein Verfahren zur NO- und/oder NOx-Messung von Kraftfahrzeugabgasen, das folgende Schritte enthält:
(a) Anordnen einer Abgassonde 9 in einer Abgasleitung 3 eines Kraftfahrzeugmotors;
(b) Drehzahlerhöhung des Kraftfahrzeugmotors;
(c) Durchführen eines Messvorgangs in einem Bereich, in dem ein Anstieg der Drehzahl pro Zeiteinheit grösser ist als ein vorbestimmter Schwellwert S und/oder für einen vorbestimmten Zeitraum T während der Drehzahlerhöhung;
(d1) während des Messvorgangs, mehrfaches Erfassen der NO- und/oder NOx-Konzentration in der Abgasleitung 3 in schneller Abfolge mit einer Messfrequenz von zumindest zehnmal pro Sekunde mittels einer Messeinrichtung 17;
(e) Anzeigen und/oder Auswerten der erfassten Werte für die NO und/oder NOx-Konzentration.

Die Erfindung betrifft in einem 2. Aspekt nach dem 1. Aspekt ein Verfahren mit den weiteren Schritten:
(d2) Überprüfen ob der Schwellwert S für einen vorbestimmten Zeitraum T überschritten wird; und
(d3) Erklären des Messvorgangs als gültig, wenn Schritt d2 bejaht wird.

Die Erfindung betrifft in einem 3. Aspekt nach dem 1. oder 2. Aspekt ein Verfahren, wobei der vorbestimmte Zeitraum T 0,5-3s, bevorzugt 1-2s beträgt.

Die Erfindung betrifft in einem 4. Aspekt nach zumindest dem 1. bis 3. Aspekt ein Verfahren, wobei im Verfahrensschritt c die Drehzahlerhöhung des Motors wenigstens zeitweise im Bereich von 80 bis 100%, insbesondere im Bereich von 90 bis 100%, der Maximalbeschleunigung des Motors durchgeführt wird und/oder wobei sich der Kraftfahrzeugmotor in einem vorbestimmten Lastbereich von mindestens 5 kW, bevorzugt von mindestens 11 kW befindet.

Die Erfindung betrifft in einem 5. Aspekt nach zumindest dem 1. bis 4. Aspekt ein Verfahren, wobei der Messvorgang in einem vorbestimmten Lastbereich des Kraftfahrzeugmotors durchgeführt wird, wobei der vorbestimmte Lastbereich 10 - 100 % Volllast, bevorzugt 90 - 100% Volllast oder weiter bevorzugt 100% Volllast beträgt.

Die Erfindung betrifft in einem 6. Aspekt nach zumindest dem 1. bis 5. Aspekt ein Verfahren, wobei der Schwellwert S grösser ist als eine Drehzahländerung deltaU von 1000 U/min pro Sekunde und bevorzugt grösser ist als eine Drehzahländerung deltaU von 2500 U/min pro Sekunde und/oder wobei der Schwellwert S einen Drehzahlanstiegsbereich von 2000-5000 U/min, insbesondere 2500-4000 U/min, umfasst.

Die Erfindung betrifft in einem 7. Aspekt nach zumindest dem 1. bis 6. Aspekt ein Verfahren, wobei während des Messvorgangs eine Startdrehzahl eine Leerlaufdrehzahl ist und/oder eine Enddrehzahl durch die Drehzahlbegrenzung des Motors festgelegt ist.

Die Erfindung betrifft in einem 8. Aspekt nach zumindest dem 1. bis 7. Aspekt ein Verfahren, wobei sich der Kraftfahrzeugmotor eingebaut in einem Kraftfahrzeug befindet und dieses während des Messvorgangs b im Leerlauf befindet.

Die Erfindung betrifft in einem 9. Aspekt nach zumindest dem 1. bis 8. Aspekt ein Verfahren, wobei die Verfahrensschritte b bis d1 und/oder b bis d3 mehrfach, insbesondere dreimal, in kurzer Abfolge hintereinander durchgeführt werden.

Die Erfindung betrifft in einem 10. Aspekt nach zumindest dem 1. bis 9. Aspekt ein Verfahren, wobei die Messreinrichtung nach dem Chemilumineszenz-Prinzip arbeitet.

Die Erfindung betrifft in einem 11. Aspekt nach zumindest dem 1. bis 10. Aspekt ein Verfahren, wobei in einem zusätzlichen Verfahrensschritt zumindest eine Öltemperatur des Kraftfahrzeugmotors und/oder eine Temperatur einer Abgasnachbehandlungseinrichtung abgefragt wird, und der Messvorgang nur über vorbestimmten Grenztemperaturen durchgeführt wird.

Die vorstehenden Ausführungsbeispiele der vorliegenden Erfindung wurden anhand beispielhafter Figuren detailliert beschrieben. Die Merkmale der Ausführungsbeispiele sind im Ganzen oder teilweise kombinierbar und die vorliegende Erfindung ist nicht auf die beschriebenen Ausführungsbeispiele beschränkt.

### Bezugszeichenliste

- 1: Vorrichtung zur NO- und/oder NOx-Messung von Kraftfahrzeugabgasen
- 3: Abgasleitung
- 5: Kraftfahrzeug
- 7: Verbrennungsabgase
- 9: Abgassonde
- 11: Pumpe
- 13: Flussbegrenzung
- 15: NOx-Konverter
- 17: Messeinrichtung
- 19: Messleitung
- 20: Entnahmeleitung

## Patentansprüche

1. Vorrichtung zur NO- und/oder NOx-Messung von Kraftfahrzeugabgasen (1), mit
einer Abgassonde (9), die derart ausgebildet ist, dass diese in einer Abgasleitung (3) des Motors angeordnet ist, und
zusätzlich umfassend eine Erfassungseinrichtung, die derart ausgebildet ist, dass diese die Drehzahl eines Kraftfahrzeugmotors während eines Messvorgangs in einem Bereich erfasst, in dem ein Anstieg der Drehzahl pro Zeiteinheit grösser ist als ein vorbestimmter Schwellwert S und für einen vorbestimmte Zeitraum T während einer Drehzahlerhöhung, die Vorrichtung ferner **gekennzeichnet durch**
eine Messeinrichtung (17), die mit der Abgassonde (9) in Verbindung steht und die eingerichtet ist, während dem Messvorgang NO und/oder NOx mit einer Messfrequenz von zumindest zehnmal pro Sekunde zu erfassen,

2. Vorrichtung (1) nach zumindest einem der Ansprüche 1, wobei die Messeinrichtung (17) nach dem Chemilumineszenz-Prinzip arbeitet.

3. Vorrichtung (1) nach zumindest einem der Ansprüche 1 oder 2, wobei die Messfrequenz zumindest 20 Messungen/Sek, insbesondere zumindest 20 bis 3000 Messungen/Sekunde, insbesondere mindestens 80 bis 400 Messungen/Sekunde beträgt.

4. Vorrichtung (1) nach zumindest einem der Ansprüche 1 bis 3, wobei der Schwellwert S grösser ist als eine Drehzahländerung deltaU von 1000 U/min pro Sekunde und bevorzugt grösser ist als eine Drehzahländerung deltaU von 2500 U/min pro Sekunde und/oder wobei der Schwellwert S einen Drehzahlanstiegsbereich von 2000-5000 U/min, insbesondere 2500-4000 U/min, umfasst.

5. Vorrichtung (1) nach zumindest einem der vorangehenden Ansprüche, wobei eine Pumpe (11) vorgesehen ist, die mit einer Messleitung (19) in Verbindung steht, so dass über eine vorgesehene Flussbeschränkung (13) der Druck in der Messleitung (19) auf 10 bis 250 mbar, insbesondere 25 bis 150 mbar, einstellbar ist.

6. Vorrichtung (1) nach Anspruch 5, wobei die Flussbeschränkung (13) eine Düse, eine Kapillare, ein verengtes Rohr und/oder eine Blende ist.

7. Vorrichtung (1) nach Anspruch 4, wobei die Messleitung (19) einen Innendurchmesser von 2 bis 10 mm aufweist und/oder wobei die Messeinrichtung (17) eine Reaktionskammer mit einem Volumen von 1 bis 100ml, bevorzugt von 50 bis 80ml, weiter bevorzugt von 60 bis 70ml, aufweist.

8. Vorrichtung (1) nach zumindest einem der vorangehenden Ansprüche, wobei der Messeinrichtung (17) vorgeschaltet ein NOx-Konverter (15) zum Umwandeln von Stickoxiden, bspw. NO2, N2O3 und N2O4, in NO vorgesehen ist.

9. Verfahren zur NO- und/oder NOx-Messung von Kraftfahrzeugabgasen, das folgende Schritte enthält:
(a) Anordnen einer Abgassonde (9) in einer Abgasleitung (3) eines Kraftfahrzeugmotors;
(b) Drehzahlerhöhung des Kraftfahrzeugmotors;
(c) Durchführen eines Messvorgangs in einem Bereich, in dem ein Anstieg der Drehzahl pro Zeiteinheit grösser ist als ein vorbestimmter Schwellwert S und/oder für einen vorbestimmten Zeitraum T während der Drehzahlerhöhung;
(d1) während des Messvorgangs, mehrfaches Erfassen der NO- und/oder NOx-Konzentration in der Abgasleitung (3) in schneller Abfolge mit einer Messfrequenz von zumindest zehnmal pro Sekunde mittels einer Messeinrichtung (17);
(d2) Überprüfen ob der Schwellwert S für einen vorbestimmten Zeitraum T überschritten wird;
(d3) Erklären des Messvorgangs als gültig, wenn Schritt (d2) bejaht wird; und
(e) Anzeigen und/oder Auswerten der erfassten Werte für die NO und/oder NOx-Konzentration.

10. Verfahren nach zumindest einem der Ansprüche 9, wobei der vorbestimmte Zeitraum T 0,5-3s, bevorzugt 1-2s beträgt.

11. Verfahren nach zumindest einem der Ansprüche 9 oder 10, wobei im Verfahrensschritt (c) die Drehzahlerhöhung des Motors wenigstens zeitweise im Bereich von 80 bis 100%, insbesondere im Bereich von 90 bis 100%, der Maximalbeschleunigung des Motors durchgeführt wird und/oder wobei sich der Kraftfahrzeugmotor in einem vorbestimmten Lastbereich von mindestens 5 kW, bevorzugt von mindestens 11 kW befindet.

12. Verwendung einer Vorrichtung 1 nach einem der Ansprüche 1 bis 8 in einem der Verfahren nach einem der Ansprüche 9 bis 11.

13. System aus einem Kraftfahrzeug (5) und einer Vorrichtung zur NOx-Messung von Kraftfahrzeugabgasen (1) nach einem der Ansprüche 1 bis 8,
wobei das Kraftfahrzeug (5) einen Verbrennungsmotor und eine Abgasleitung (3), die mit dem Verbrennungsmotor verbunden ist, aufweist,
wobei die Abgassonde (9) in der Abgasleitung (3) des Motors zum Aufnehmen von Abgasen des Verbrennungsmotors anordenbar ist, und
wobei die Erfassungseinrichtung mit einer Steuereinheit des Motors zum Abfragen und/oder zum Steuern der Drehzahl des Motors verbindbar ist.

## Claims

1. Device for measuring NO and/or NOx of motor vehicle exhaust gases (1), having
an exhaust gas probe (9) which is designed in such a way that it is arranged in an exhaust line (3) of the engine, and
additionally comprising a detection device which is designed in such a way that it detects the rotational speed of a motor vehicle engine during a measuring operation in a range in which an increase in the rotational speed per unit time is greater than a predetermined threshold value S and for a predetermined time period T during an increase in rotational speed, the device also being **characterized by**
a measuring device (17) which is connected to the exhaust gas probe (9) and which is set up to detect NO and/or NOx at a measuring frequency of at least ten times per second during the measuring operation.

2. Device (1) according to at least one of Claims 1, wherein the measuring device (17) operates according to the chemiluminescence principle.

3. Device (1) according to at least one of Claims 1 or 2, wherein the measuring frequency is at least 20 measurements/sec, in particular at least 20 to 3000 measurements/second, in particular at least 80 to 400 measurements/second.

4. Device (1) according to at least one of Claims 1 to 3, wherein the threshold value S is greater than a change in rotational speed deltaU of 1000 rpm per second and is preferably greater than a change in rotational speed deltaU of 2500 rpm per second and/or wherein the threshold value S comprises a rotational speed increase range of 2000-5000 rpm, in particular 2500-4000 rpm.

5. Device (1) according to at least one of the preceding claims, wherein a pump (11) is provided which is connected to a measuring line (19), with the result that the pressure in the measuring line (19) can be set to 10 to 250 mbar, in particular 25 to 150 mbar, via a provided flow restriction (13).

6. Device (1) according to Claim 5, wherein the flow restriction (13) is a nozzle, a capillary, a constricted tube and/or a diaphragm.

7. Device (1) according to Claim 4, wherein the measuring line (19) has an internal diameter of 2 to 10 mm and/or wherein the measuring device (17) has a reaction chamber with a volume of 1 to 100 ml, preferably of 50 to 80 ml, further preferably of 60 to 70 ml.

8. Device (1) according to at least one of the preceding claims, wherein a NOx converter (15) for converting nitrogen oxides, for example NO2, N2O3 and N2O4, into NO is provided upstream of the measuring device (17).

9. Method for measuring NO and/or NOx of motor vehicle exhaust gases, which method comprises the following steps:
(a) arranging an exhaust gas probe (9) in an exhaust line (3) of a motor vehicle engine;
(b) increasing the rotational speed of the motor vehicle engine;
(c) carrying out a measuring operation in a range in which an increase in the rotational speed per unit time is greater than a predetermined threshold value S and/or for a predetermined time period T during the increase in rotational speed;
(d1) during the measuring operation, repeatedly detecting the NO and/or NOx concentration in the exhaust gas line (3) in rapid sequence at a measuring frequency of at least ten times per second by means of a measuring device (17);
(d2) checking whether the threshold value S is exceeded for a predetermined time period T;
(d3) declaring the measuring operation to be valid if step (d2) is affirmed; and
(e) displaying and/or evaluating the detected values for the NO and/or NOx concentration.

10. Method according to at least one of Claims 9, wherein the predetermined time period T is 0.5-3 s, preferably 1-2 s.

11. Method according to at least one of Claims 9 or 10, wherein, in method step (c), the increase in the rotational speed of the engine is carried out at least temporarily in the range of 80 to 100%, in particular in the range of 90 to 100%, of the maximum acceleration of the engine and/or wherein the motor vehicle engine is in a predetermined load range of at least 5 kW, preferably of at least 11 kW.

12. Use of a device 1 according to one of Claims 1 to 8 in one of the methods according to one of Claims 9 to 11.

13. System comprising a motor vehicle (5) and a device for measuring NOx of motor vehicle exhaust gases (1) according to one of Claims 1 to 8,
wherein the motor vehicle (5) has an internal combustion engine and an exhaust line (3) which is connected to the internal combustion engine,
wherein the exhaust gas probe (9) can be arranged in the exhaust line (3) of the engine for receiving exhaust gases of the internal combustion engine, and wherein the detection device can be connected to a control unit of the engine for interrogating and/or for controlling the rotational speed of the engine.

## Revendications

1. Dispositif de mesure de NO et/ou de NOx de gaz d'échappement de véhicule automobile (1), comprenant
une sonde de gaz d'échappement (9) qui est réalisée de telle sorte que celle-ci soit disposée dans une conduite de gaz d'échappement (3) du moteur, et
comprenant en outre un dispositif de détection qui est réalisé de telle sorte que celui-ci détecte la vitesse de rotation d'un moteur de véhicule automobile pendant une opération de mesure dans une plage dans laquelle une augmentation de la vitesse de rotation par unité de temps est supérieure à une valeur seuil prédéfinie S et pendant une période prédéfinie T pendant une augmentation de la vitesse de rotation, le dispositif étant en outre **caractérisé par**
un dispositif de mesure (17) qui est en liaison avec la sonde de gaz d'échappement (9) et qui est conçu pour détecter, pendant l'opération de mesure, NO et/ou NOx avec une fréquence de mesure d'au moins dix fois par seconde.

2. Dispositif (1) selon au moins l'une quelconque des revendications 1, dans lequel le dispositif de mesure (17) fonctionne selon le principe de la chimioluminescence.

3. Dispositif (1) selon au moins l'une quelconque des revendications 1 ou 2, dans lequel la fréquence de mesure est d'au moins 20 mesures/seconde, en particulier d'au moins 20 à 3000 mesures/seconde, en particulier d'au moins 80 à 400 mesures/seconde.

4. Dispositif (1) selon au moins l'une quelconque des revendications 1 à 3, dans lequel la valeur seuil S est supérieure à une variation de vitesse de rotation deltaU de 1000 tr/min par seconde et de préférence supérieure à une variation de vitesse de rotation deltaU de 2500 tr/min par seconde et/ou dans lequel la valeur seuil S comprend une plage d'augmentation de vitesse de rotation de 2000 à 5000 tr/min, en particulier de 2500 à 4000 tr/min.

5. Dispositif (1) selon au moins l'une quelconque des revendications précédentes, dans lequel une pompe (11) est prévue, qui est en liaison avec une conduite de mesure (19), de sorte que la pression dans la conduite de mesure (19) peut être réglée par le biais d'une limitation de débit (13) prévue à 10 à 250 mbar, en particulier 25 à 150 mbar.

6. Dispositif (1) selon la revendication 5, dans lequel la limitation de débit (13) est une buse, un capillaire, un tube rétréci et/ou un diaphragme.

7. Dispositif (1) selon la revendication 4, dans lequel la conduite de mesure (19) présente un diamètre intérieur de 2 à 10 mm et/ou dans lequel le dispositif de mesure (17) présente une chambre de réaction avec un volume de 1 à 100 ml, de préférence de 50 à 80 ml, de manière davantage préférée de 60 à 70 ml.

8. Dispositif (1) selon au moins l'une quelconque des revendications précédentes, dans lequel un convertisseur de NOx (15) est prévu en amont du dispositif de mesure (17) pour convertir des oxydes d'azote, par exemple NO2, N2O3 et N2O4, en NO.

9. Procédé de mesure de NO et/ou de NOx de gaz d'échappement de véhicule automobile, qui contient les étapes suivantes :
(a) disposition d'une sonde de gaz d'échappement (9) dans une conduite de gaz d'échappement (3) d'un moteur de véhicule automobile ;
(b) augmentation de la vitesse de rotation du moteur de véhicule automobile ;
(c) exécution d'une opération de mesure dans une plage dans laquelle une augmentation de la vitesse de rotation par unité de temps est supérieure à une valeur seuil prédéfinie S et/ou pendant une période prédéfinie T pendant l'augmentation de la vitesse de rotation ;
(d1) pendant l'opération de mesure, détection multiple de la concentration en NO et/ou NOx dans la conduite de gaz d'échappement (3) en succession rapide avec une fréquence de mesure d'au moins dix fois par seconde au moyen d'un dispositif de mesure (17) ;
(d2) vérification si la valeur seuil S est dépassée pendant une période prédéfinie T;
(d3) déclaration de l'opération de mesure comme valide si l'étape (d2) est affirmée ; et
(e) affichage et/ou évaluation des valeurs détectées pour la concentration en NO et/ou NOx.

10. Procédé selon au moins l'une quelconque des revendications 9, dans lequel la période prédéfinie T est de 0,5 à 3 s, de préférence de 1 à 2 s.

11. Procédé selon au moins l'une quelconque des revendications 9 ou 10, dans lequel, dans l'étape de procédé (c), l'augmentation de la vitesse de rotation du moteur est effectuée au moins temporairement dans la plage de 80 à 100 %, en particulier dans la plage de 90 à 100 %, de l'accélération maximale du moteur et/ou dans lequel le moteur de véhicule automobile se trouve dans une plage de charge prédéfinie d'au moins 5 kW, de préférence d'au moins 11 kW.

12. Utilisation d'un dispositif 1 selon l'une quelconque des revendications 1 à 8 dans l'un des procédés selon l'une quelconque des revendications 9 à 11.

13. Système constitué d'un véhicule automobile (5) et d'un dispositif de mesure de NOx de gaz d'échappement de véhicule automobile (1) selon l'une quelconque des revendications 1 à 8,
dans lequel le véhicule automobile (5) présente un moteur à combustion interne et une conduite de gaz d'échappement (3) qui est connectée au moteur à combustion interne,
dans lequel la sonde de gaz d'échappement (9) peut être disposée dans la conduite de gaz d'échappement (3) du moteur pour recevoir des gaz d'échappement du moteur à combustion interne, et
dans lequel le dispositif de détection peut être connecté à une unité de commande du moteur pour interroger et/ou commander la vitesse de rotation du moteur.
